# EUROPEAN PATENT APPLICATION

(11) **EP 4 262 007 A2**
(43) Date of publication of application: **18.10.2023**
(21) Application number: 23152291.3
(22) Date of filing: 18.01.2023
(51) Int. Cl.: H01M 50/50, H01R 11/28, H01R 13/639

(54) **ENERGY STORAGE SYSTEM**

(30) Priority: 14.04.2022 CN 202220855691 U
(71) Applicant: Sungrow Energy Storage Technology Co., Ltd., Hefei, Anhui 230088 (CN)
(72) Inventor: DONG, Puyun, Hefei (CN); SHI, Xiang, Hefei (CN); SU, Jinguo, Hefei (CN)
(74) Representative: Zacco Norway AS

(57) **Abstract**

The present application relates to an energy storage system, which is adapted to be mounted on a base body, the energy storage system includes connecting assemblies, a cable and multiple battery modules, the cable is electrically connected with the connecting assemblies, the multiple battery modules are arranged on the base body through the connecting assemblies, and the multiple battery modules are electrically connected through the connecting assemblies. Multiple battery modules are provided according to the present application, the multiple battery modules are mounted on the base body through the connecting assemblies and are distributed in units.

## Description

### FIELD

The present application relates to the technical field of battery energy storage, in particular to an energy storage system.

### BACKGROUND

At present, a household battery system is generally mounted on the ground, which takes up a lot of space and the battery system is very inconvenient to be remounted if there is a demand for capacity expansion. Alternatively, the battery system is hung on a wall surface means of lugs and screws. The battery system is very heavy, which is inconvenient to mount and has potential safety hazards of collapse. The current household energy storage system, whether mounted on the ground or on the wall surface, has a large number of mounting and wiring problems, which affect the beauty of a base body, and is very inconvenient to mount.

### SUMMARY

An energy storage system is provided according to the present application, so as to solve at least one aspect of the above problems.

In order to solve the above problems, an energy storage system is provided according to the present application, which is adapted to be mounted on a base body, the energy storage system includes connecting assemblies, a cable and multiple battery modules, the cable is electrically connected with the connecting assemblies, the multiple battery modules are arranged on the base body through the connecting assemblies, and the multiple battery modules are electrically connected through the connecting assemblies.

In an embodiment, each connecting assembly includes a male joint and a female joint, the male joint and the female joint are arranged on the battery module and the base body, respectively, and the male joint is configured to be connected with the female joint so as to arrange the battery module on the base body.

In an embodiment, the female joint includes a latch socket, which is matched with the corresponding male joint, and the male joint is configured to be clamped with the latch socket.

In an embodiment, the latch socket further includes a latching mechanism, the latching mechanism is configured to lock the male joint with the latch socket after the male joint is clamped with the latch socket.

In an embodiment, the latching mechanism includes a latch cover and a latch, one end of the latch cover is hinged to the latch socket and is configured to close or open one end of the latch socket, the other end of the latch cover is connected with the latch, and the latch is configured to abut against the latch socket to lock the latch socket.

In an embodiment, the female joint is provided with a first connection portion, the male joint is provided with a second connection portion, and the first connection portion and the second connection portion are suitable to be in a magnetic connection.

In an embodiment, the first connection portion and the second connection portion are of a socket structure and a boss structure, respectively, which are matched with each other.

In an embodiment, the cable is configured to be arranged inside the base body.

In an embodiment, the energy storage system further includes an adapter and a switch box, the switch box is configured to be connected to the base body, the adapter is arranged inside the switch box, and the adapter is connected with the connecting assembly through the cable.

In an embodiment, the energy storage system further includes a mobile structure, the mobile structure is configured to be arranged on the base body, the connecting assembly is configured to be connected with the base body by the mobile structure, the connecting assembly is configured to be moved to a surface of the base body through the mobile structure when the connecting assembly is connected with the battery module, and the connecting assembly is configured to be moved to an interior of the base body by the mobile structure when the connecting assembly is not connected with the battery module.

Compared with the conventional technology, the original overall battery system is divided into multiple battery modules by arranging multiple battery modules according to the present application. The multiple battery modules are mounted on the base body (such as a wall) by the connecting assemblies and are distributed in units. The battery modules can be mounted as needed to achieve flexible power-supply configuration, and the connecting assembly can be added as needed to increase the battery modules and meet the capacity expansion requirements. Multiple battery modules are electrically connected by the connecting assemblies, and the connecting assemblies are connected by the cable to unify the power of the multiple battery modules, so as to avoid a direct connection between the multiple battery modules, which results in a difficulty of wiring and affects the tidy of the appearance of the base body. The damaged battery module can be replaced separately for easy maintenance. The surface area of the multiple battery modules is larger, which facilitates heat dissipation, avoids excessive temperature of the battery modules, reduces the length of the battery modules in a single direction, reduces the force of the battery object applying on the base body per unit area when the battery modules are mounted on the base body, and prevents the battery modules from falling off and the base body from being damaged.

### BRIEF DESCRIPTION OF THE DRAWINGS

FIG. 1 is a first schematic structural view of an energy storage system according to an embodiment of the present application;
FIG. 2 is a second schematic structural view of the energy storage system according to an embodiment of the present application;
FIG. 3 is a first schematic structural view of a female joint according to an embodiment of the present application;
FIG. 4 is a second schematic structural view of the female joint according to an embodiment of the present application;
FIG. 5 is a schematic structural view of a male joint according to an embodiment of the present application; and
FIG. 6 is a schematic structural view of a battery module and a connecting assembly according to an embodiment of the present application.

Reference numerals are as follows:

| | |
|---|---|
| 1, battery module; | 2, cable; |
| 3, base body; | 4, male joint; |
| 41, second connection portion; | 5, female joint; |
| 51, latch socket; | 52, latch cover; |
| 53, latch; | 51, first connection portion; |
| 6, ground. | |

### DETAILED DESCRIPTION OF THE EMBODIMENTS

For a better understanding of the objective, technical features and advantages of the present application, specific embodiments of the present application are described in detail in conjunction with drawings.

It should be noted that, the terms such as "first" and "second" in the specification, the claims and the accompanying drawings of the present application are intended to distinguish between similar objects, but are not necessarily used for describing a specific sequence or a precedence order. It is to be understood that the terms shown in such a way are interchangeable in proper circumstances, so that the embodiments of the present application described herein can be implemented in orders other than the order illustrated or described herein.

In the description of the present application, it should be pointed out that, unless otherwise specified and limited, terms such as "set", "install" and "connect" should be understood broadly. For example, the connection may in forms of fixed, detachable or integrated, mechanical or electrical, directly or indirectly through intermediate media, or connected internally between two components. For those skilled in the art, the specific meaning of the above terms in the present application may be understood in the light of specific circumstances.

In the description of the specification, the description with reference to the terms "embodiment", "an embodiment", "an implementation manner" means that the specific features, structures, materials or characteristics described in conjunction with the embodiment or implementation are included in at least one embodiment or implementation manner of the present application. In the specification, schematic expressions of the above terms do not necessarily refer to the same embodiments or implementation manners. Further, the described specific features, structures, materials or characteristics can be combined in any one or more embodiments or embodiments in an appropriate manner.

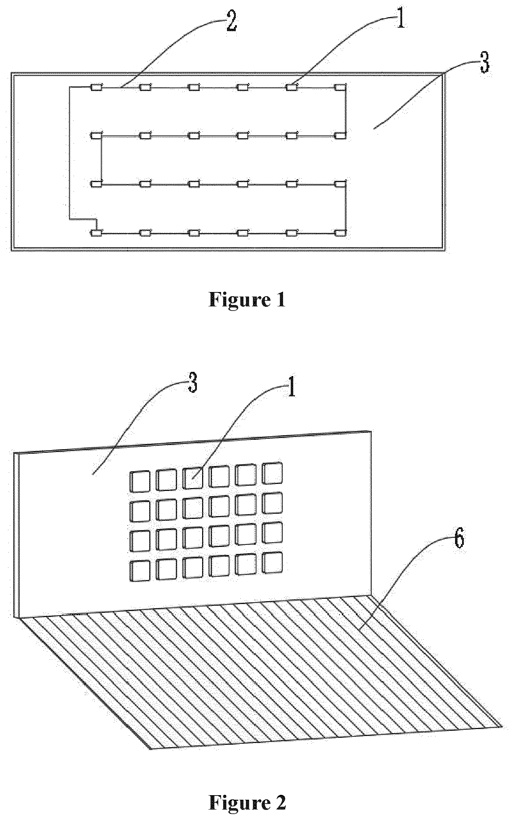

In order to solve the above technical problems, as shown in FIG. 1 and FIG. 2, an energy storage system is provided according to the present application, which is mounted on a base body 3, the energy storage system includes connecting assemblies, a cable 2 and multiple battery modules 1, the cable 2 is electrically connected with the connecting assemblies, the multiple battery modules are arranged on the base body 3 through the connecting assemblies, and the multiple battery modules 1 are electrically connected through the connecting assemblies.

Specifically, as shown in FIG. 2, the energy storage system can be mounted on a wall surface, a plate surface or other carrier on the ground 6. The energy storage system includes the connecting assemblies, the cable 2 and the battery modules 1. The connecting assemblies can be mounted on a surface of the base body 3. Multiple connecting assemblies can be provided. Multiple connecting assemblies can be connected in series or parallel to form a whole through the cable 2. Multiple battery modules 1 can be provided. Each battery module 1 corresponds to one connecting assembly. The battery module 1 is electrically connected with the connecting assembly, the power of the battery module 1 can be led out through the connecting assembly, and then transferred to the electrical appliance through the cable 2.

Alternatively, only one connecting assembly can be provided, and the multiple battery modules 1 are all connected to this connecting assembly.

In this embodiment, the original overall battery system is divided into multiple battery modules by arranging multiple battery modules 1. Compared with the conventional technology, the multiple battery modules 1 are mounted on the base body 3 through the connecting assemblies and are distributed in units. The battery modules 1 can be mounted as needed to achieve a flexible power configuration, and the connecting assembly can be added as needed to increase the battery modules 1 and meet the capacity expansion requirements. Multiple battery modules 1 are electrically connected by the connecting assemblies, and the connecting assemblies are connected by the cable to unify the power of the multiple battery modules, so as to avoid a direct connection between the multiple battery modules 1, which results in a difficulty of wiring and affects the tidy of an appearance of the base body 3. The damaged battery module 1 can be replaced separately for easy maintenance. The surface area of the multiple battery modules 1 is larger, which facilitates heat dissipation, avoids excessive temperature of the battery modules 1, reduces the length of the battery modules 1 in a single direction, reduces the force of the battery object applying on the base body 3 per unit area when the battery modules 1 are mounted on the base body 3, and prevents the battery modules 1 from falling off and the base body 3 from being damaged.

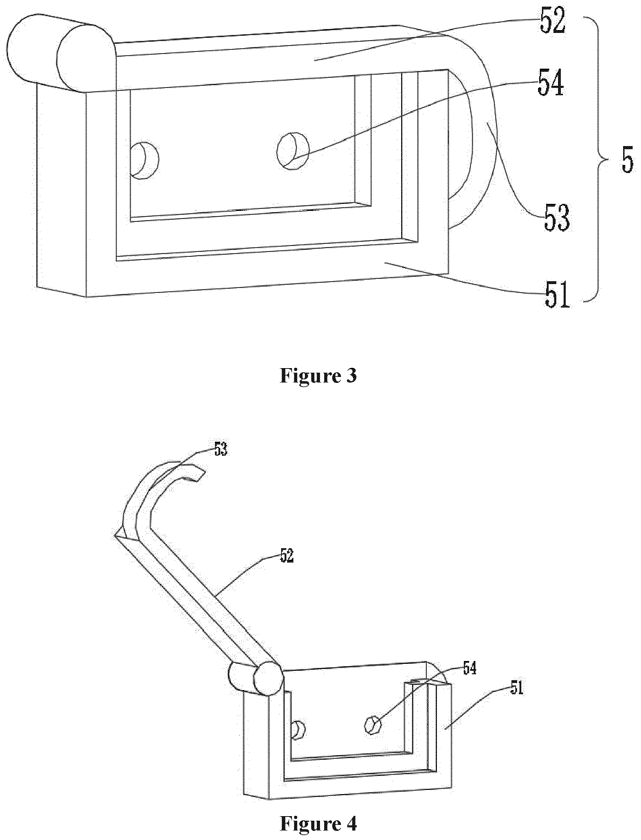

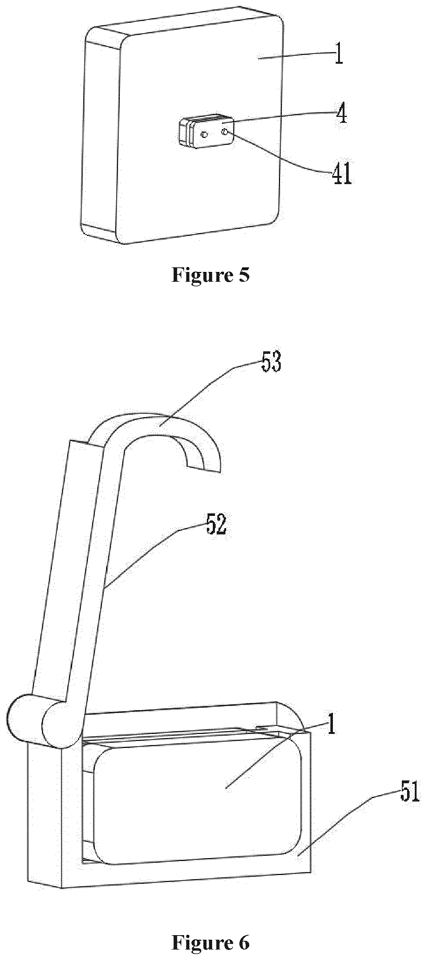

In an embodiment of the present application, as shown in FIG. 3 and the FIG. 5, each connecting assembly includes a male joint 4 and a female joint 5, the male joint 4 and the female joint 5 are arranged on the battery modules 1 and the base body 3, respectively, and the male joint 4 is configured to be connected with the female joint 5 to arrange the battery module 2 on the base body 3.

Specifically, the connecting assembly can be divided into two parts, that is, the male joint 4 and the female joint 5. The male joint 4 is arranged on the battery module 1, the female joint 5 is arranged on the base body 3, the male joint 4 and the female joint 5 can be used in cooperation, and the male joint 4 is connected with the female joint 5 to connect the battery module 1 to the base body 3. The male joint 4 and the female joint 5 can be of a snap-fit structure with a latch & a latch socket, or a plug & a socket structure. The connection mode between the male joint 4 and the female joint 5 is not specifically limited here, as long as the battery module 1 can be connected to the base body 3.

In this embodiment, by providing the male joint 4 and the female joint 5, and arranging the male joint 4 and the female joint 5 on the battery module 1 and the base body 3, respectively, it is convenient to connect the battery module 1 to the base body 3.

In an embodiment of the present application, as shown in FIG. 3 and FIG. 4, each female joint 5 includes a latch socket 51 which is matched with the corresponding male joint 4, and the male joint 4 is configured to be clamped in the latch socket 51.

Specifically, the female joint 5 includes the latch socket 51, a shape and a size of the latch socket 51 are matched with a shape and a size of the male joint 4, the male joint 4 can be placed in the latch socket 51 and is clamped with the latch socket 51, so as to connect the male joint 4 with the female joint 5 and connect the battery module 1 to the base body 3.

In this embodiment, the latch socket 51 is defined in the female joint 5, the latch socket 51 can be used in conjunction with the male joint 4, and the male joint 4 can be clamped with the latch socket 51, so that the male joint 4 can be connected with the female joint 5, and the battery module 1 can be connected to the base body 3.

In an embodiment of the present application, the latch socket 51 further includes a latching mechanism, the latching mechanism is configured to lock the male joint 4 with the latch socket 51 after the male joint 4 being clamped with the latch socket 51.

Specifically, the latch socket 51 includes the latching mechanism, the latching mechanism may be a cover plate with a boss structure on both sides, two ends of the latch socket 51 are provided with a socket structure respectively, the boss structure is configured to be inserted into the socket structure to connect the latching mechanism with the latch socket 51, the socket structure can be in interference fit with the boss structure to achieve the locking effect; the latching mechanism may be a cover plate with an L-shaped structure on both ends, two ends of the latch socket 51 are provided with a boss structure corresponding to the L-shaped structure respectively, the L-shaped structure is clamped with the boss structure to connect the latching mechanism with the latch socket 51 and achieve the locking effect, and the connection mode between the latching mechanism and the latch socket 51 is not specifically limited here as long as the latching mechanism is stably fixed on the latch socket 51.

In this embodiment, by providing the latching mechanism, connecting and locking the latching mechanism with the latch socket 51 after the male joint 4 being clamped with the latch socket 51, and fixing the male joint 4 on the latch socket 51, the male joint 4 is prevented from falling off from the latch socket 51, so that the male joint 4 is connected more firmly with the latch socket 51, and stability of the structure is enhanced.

In an embodiment of the present application, as shown in FIG. 3, FIG. 4 and FIG. 6, the latching mechanism includes a latch cover 52 and a latch 53, one end of the latch cover 52 is hinged to the latch socket 51 and is configured to close or open one end of the latch socket 51, the other end of the latch cover 52 is connected with the latch 53, and the latch 53 is configured to abut against the latch socket 51 to lock the latch socket 51.

Specifically, the latching mechanism may include the latch cover 52 and the latch 53, and one end of the latch cover 52 is hinged to the latch socket 51, so that the latch cover 52 can be rotated about a connection portion between the latch cover 52 and the latch socket 51 as an axis, the other end of the latch cover 52 is connected with the latch 53, the latch cover 52 can be rotated so as to cover the male joint 4 after the male joint 4 is clamped with the latch socket 51, the latch 53 abuts against the latch socket 51 and is latched to the latch socket 51, and the latching mechanism is latched on the latch socket 51 to fix the male joint 4 to the latch socket 51.

In this embodiment, by providing the latch cover 52 and the latch 53, the latch cover 52 can be hinged to the latch socket 51, the latch cover 52 can be rotate to cover the male joint 4 after the male joint 4 is clamped with the latch socket 51, the latch 53 is connected with the latch cover 52 and is latched on the latch socket 51, the latch cover 52 is used in conjunction with the latch 53 to lock the male joint 4 to the latch socket 51 and fix the male joint 4 to the latch socket 51, which increases the friction force, prevents the male joint 4 from falling off from the latch socket 51, so that the male joint 4 is connected more firmly with the latch socket 51, and the stability of the structure is enhanced.

In an embodiment of the present application, as shown in FIG. 3 and FIG. 5, the female joint 5 is provided with a first connection portion 54, the male joint 4 is provided with a second connection portion 41, and the first connection portion 54 and the second connection portion 41 are suitable for magnetic connection, so as to conduct the battery module 1 with the cable 2.

Specifically, the female joint 5 is provided with the first connection portion 54, the male joint 4 is provided with the second connection portion 41, the first connection portion 54 is used in conjunction with the second connection portion 41, the first connection portion 54 is made of magnetic material, the second connection portion 41 is made of metal material, the first connection portion 54 can be magnetically attracted to the second connection portion 41, so as to conduct the battery module 1 with the cable 2, and the electric energy of the battery module 1 can be transmitted along the cable 2. Similarly, the first connection portion 54 can be made of metal material, and the second connection portion 41 can be made of magnetic material.

In this embodiment, by providing the first connection portion 54 on the female joint 5, and arranging the second connection portion 41 on the male joint 4, the first connection portion 54 can be magnetically attracted to the second connection portion 41, to conduct the battery module 1 with the cable 2, so as to lead out the electric energy of the battery module 1.

In an embodiment of the present application, as shown in FIG. 3 and FIG. 5, the first connection portion 54 and the second connection portion 41 are respectively of a socket structure and a boss structure which are matched with each other.

Specifically, the first connection portion 54 is in a socket structure, the second connection portion 41 is in a boss structure, the socket structure is matched with the boss structure, the boss structure can be inserted into the socket structure to connect the first connection portion 54 with the second connection portion 41, so that the male joint 4 is connected with the female joint 5, and the battery module 1 is connected with the cable 2. Similarly, the first connection portion 54 is in a boss structure, and the second connection portion 41 is in a socket structure.

In this embodiment, by providing one of the first connection portion 54 and the second connection portion 41 as a socket structure, and the other one as a boss structure, the boss structure can be inserted into the socket structure to connect the male joint 4 with the female joint 5, which is convenient to conduct the battery module 1 with the cable 2 and lead out the electric energy of the battery module 1.

In an embodiment, the cable 2 is configured to be arranged inside the base body 3.

Specifically, the connecting assemblies are connected by the cable 2, the connecting assemblies are arranged in the surface of the base body 3, and the cable 2 can be pre-embedded inside the base body 3 to connect the connecting assemblies together.

In this embodiment, by providing the cable 2 inside the base body 3, the cable 2 is arranged inside the base body 3 compared with the existing technology in which the battery modules 1 are directly connected by the cable 2, which can avoid the wiring confusion of the cable 2, keep the appearance of the base body 3 tidy, prevent the cable 2 from being exposed to the external environment, and avoid the accidental disconnection of the cable 2, which affects the normal operation of the energy storage system.

In an embodiment of the present application, the energy storage system further includes an adapter and a switch box, the switch box is configured to be connected to the base body 3, the adapter is arranged inside the switch box, and the adapter is connected with the connecting assembly through the cable 2 for outputting electric energy.

Specifically, the energy storage system further includes the adapter and the switch box, the switch box is connected to the cable 2, the adapter is connected with the cable 2 that transmits all electric energy and transmits the electric energy to the consumer device after all the battery modules 1 are connected into a whole by the cable 2, the consumer device is connected with the adapter, the adapter can be connected with different consumer devices, and the switch box is arranged in the surface of the base body 3 and can cover the adapter.

In this embodiment, by providing the adapter, the electric energy is transmitted from the cable 2 to the consumer device through the adapter. The adapter can be connected with different consumer devices to facilitate the replacement of the consumer device and expand the applicability of the energy storage system.

In an embodiment of the present application, the energy storage system further includes a mobile structure, the mobile structure is configured to be arranged on the base body 3, the connecting assembly is configured to be connected with the base body 3 through the mobile structure, the connecting assembly is configured to be moved to the surface of the base body 3 through the mobile structure when the connecting assembly is connected with the battery module 1, and the connecting assembly is configured to be moved to an interior of the base body 3 through the mobile structure when the connecting assembly is not connected with the battery module 1.

Specifically, the energy storage system further includes the mobile structure, the mobile structure is arranged on the base body 3, the connecting assembly is connected with the base body 3 by the mobile structure, and the mobile structure can move the connecting assembly from the surface of the base body 3 to the interior of the base body 3. The connecting assembly is arranged on the surface of the base body 3 when the battery module 1 needs to be mounted; and the connecting assembly can be moved from the surface of the base body 3 to the interior of the base body 3 by the mobile structure when the battery module 1 does not need to be mounted.

The mobile structure may be a hinge structure, with one end arranged in the base body 3 and the other end connected to the connecting assembly. The connecting assembly can be turned from the surface of the base body 3 to the interior of the base body 3 or from the interior of the base body 3 to the surface of the base body 3 by the hinge structure. The mobile structure may also be a pulley structure, where multiple pulleys are arranged on a peripheral side of the connecting assembly, respectively, and abut against the connecting assembly. The connecting assembly can slide from the surface of the base body 3 to the interior of the base body 3 or from the interior of the base body 3 to the surface of the base body 3 by the pulleys. The specific structure of the mobile structure is not specifically limited here, as long as the connecting assembly can move between the surface of the base body 3 and the interior of the base body 3.

In this embodiment, by providing the mobile structure, the connecting assembly is connected with the base body 3 by the mobile structure, the connecting assembly is moved to the surface of the base body 3 when the battery module 1 needs to be mounted; and the connecting assembly is moved to the interior of the base body 3 when the battery module 1 does not need to be mounted. The position of the connecting assembly can be moved according to needs, and the appearance of the base body 3 is kept clean and tidy when the battery module 1 is not mounted.

Although the disclosure of the present application is as above, the protection scope of the present application is not limited to this. Without departing from the spirit and scope of the present application, those skilled in the art can make various changes and modifications, which all fall into the protection scope of the present application.

## Claims

1. An energy storage system, adapted to be mounted on a base body (3), wherein the energy storage system comprises connecting assemblies, a cable (2) and a plurality of battery modules (1), the cable (2) is electrically connected with the connecting assemblies, the plurality of battery modules (1) are arranged on the base body (1) through the connecting assemblies, and the plurality of battery modules (1) are electrically connected through the connecting assemblies.

2. The energy storage system according to claim 1, wherein each connecting assembly comprises a male joint (4) and a female joint (5), the male joint (4) and the female joint (5) are arranged on the battery module (1) and the base body (3), respectively, and the male joint (4) is configured to be connected with the female joint (5) so as to arrange the battery module (1) on the base body (3).

3. The energy storage system according to claim 2, wherein the female joint (5) comprises a latch socket (51), which is matched with the corresponding male joint (4), and the male joint (4) is configured to be clamped with the latch socket (51).

4. The energy storage system according to claim 3, wherein the latch socket (51) further comprises a latching mechanism, the latching mechanism is configured to lock the male joint (4) with the latch socket (51) after the male joint (4) is clamped with the latch socket (51).

5. The energy storage system according to claim 4, wherein the latching mechanism comprises a latch cover (52) and a latch (53), one end of the latch cover (52) is hinged to the latch socket (51) and is configured to close or open one end of the latch socket (51), the other end of the latch cover (52) is connected with the latch (53), and the latch (53) is configured to abut against the latch socket (51) to lock the latch socket (51).

6. The energy storage system according to claim 2, wherein the female joint (5) is provided with a first connection portion (54), the male joint (4) is provided with a second connection portion (41), wherein the first connection portion (54) and the second connection portion (41) are configured to be in a magnetic connection.

7. The energy storage system according to claim 6, wherein the first connection portion (54) and the second connection portion (41) are in a socket structure and a boss structure, respectively, which are matched with each other.

8. The energy storage system according to claim 1, wherein the cable (2) is configured to be arranged inside the base body (3).

9. The energy storage system according to claim 1, further comprising an adapter and a switch box, wherein the switch box is configured to be connected to the base body (3), the adapter is arranged inside the switch box, and the adapter is connected with the connecting assembly through the cable (2).

10. The energy storage system according to claim 1, further comprising a mobile structure, wherein the mobile structure is configured to be arranged on the base body (3), the connecting assembly is configured to be connected with the base body (3) by the mobile structure, the connecting assembly is configured to be moved to a surface of the base body (3) by the mobile structure when the connecting assembly is connected with the battery module (1), and the connecting assembly is configured to be moved to an interior of the base body (3) by the mobile structure when the connecting assembly is not connected with the battery module (1).
